# EUROPEAN PATENT SPECIFICATION

(11) **EP 2 010 822 B1**
(45) Date of publication and mention of the grant of the patent: **14.08.2013**
(21) Application number: 07748407.9
(22) Date of filing: 17.04.2007
(51) Int. Cl.: F23K 3/00, B65G 65/40, F23G 5/44

(54) **DEVICE AT A CONTAINER FOR COMBUSTIBLE GOODS ARRANGED TO BE TRANSPORTED BY A CONVEYOR FROM THE CONTAINER TO SUBSEQUENT MANAGEMENT**
VORRICHTUNG AN EINEM BEHÄLTER FÜR BRENNBARE GÜTER, DIE ZUM TRANSPORT DURCH EIN FÖRDERBAND ANGEORDNET SIND, DAS VON DEM BEHÄLTER ZUR NACHFOLGENDEN VERWALTUNG TRANSPORTIERT WIRD
DISPOSITIF DANS UN CONTENANT POUR ELEMENTS COMBUSTIBLES AGENCES POUR ETRE TRANSPORTES PAR UN TRANSPORTEUR A PARTIR DU CONTENANT JUSQU'A UNE POSITION DE GESTION SUBSEQUENTE

(30) Priority: 21.04.2006 SE 0600873
(43) Date of publication of application: 07.01.2009
(73) Proprietor: Lidani AB, 429 34 Kullavik (SE)
(72) Inventor: DANIELSSON, Björn, 429 34 Kullavik (SE)
(74) Representative: Bergentall, Annika Maria
(86) International application number: PCT/SE2007/050246
(87) International publication number: WO 2007/123480

(56) References cited:
- EP-A2- 1 267 123
- WO-A1-90/15766
- WO-A1-2004/078625
- AT-B- 411 098
- DE-A1- 3 435 026
- SE-L- 9 504 126

## Description

The present invention relates to a device at a container for fuel pellets and similar combustible goods arranged to be transported by a conveyor from said container to subsequent management, and that an inlet opening, extending along essentially the entire length of the conveyor and situated laterally positioned from the conveyor, for combustible goods is arranged to substantially completely unload said conveyor during supply of combustible goods via the inlet opening to the conveyor.

Normally, a rotatably driven conveyor screw or another suitable feeding conveyor is provided in connection with a container with the purpose of allowing feeding forward of pellets or the like arranged to be fed to an intended burner or further to another storage space. In that connection, all pellets fed out to an intended feeding conveyor are supported directly on top of the conveyor and therefore mountings and the like herefor are loaded heavily and that stronger driving motors are required to properly be able to feed out the combustible goods from said container without problems. It is also important that discharging is effected along the entire length extension of the container and conveyor.

By, for instance, AT 411098 B, a device is previously known at a container for pellets, the unloading of the conveyor screw having been tried to be solved by internally in the storage container for the pellets allowing mounting of a roof-like protective cap above the conveyor. A certain part of the pellets in the container falls down along a guide plate (12) to a conveyor worm (5) and directly down into a shaft at the terminal end of the screw, however, straight down on the screw (5). The disadvantage of said known solution is that, in addition to the screw being affected by a superadjacent heavy load of pellets (2), also that a great number of pellets (2) will be left in the container (4), at least on top of the protective plate (7) and at one side (12) thereof. Thereby, inspection of the status of the parts included in the conveyor worm (5) in that connection and the surrounding space is not so easily allowed from outside.

The device previously known by SE 525 003 C2 and EP 1 267 123 A2, respectively, lacks possibility of inspection of the conveyor. This is a very essential disadvantage if, e.g., the conveyor gets stuck and it is not possible to reach the same to fix the failure, e.g., if some foreign object has obstructed the conveyor so that the same can neither be driven forward nor rearward.

If then the fuel container is filled with fuel, one first has to discharge all fuel before it is possible to gain access to the conveyor from within the container or that one has to try to loosen the conveyor and pull out the same so that it is possible to gain access to it from outside. Then, it becomes cumbersome to reset the conveyor in place after having fixed the failure.

Therefore, the main object of the present invention is primarily to provide a device by means of which, among other thing, the problems mentioned above are solved easily and efficiently and by simple means and that allows to also be able to rebuild existing storage spaces at previously known containers and burners, respectively, without major adaptations, costs or inconvenience, and which does not require the arrangement of any specially formed conveyor, such as a screw having a varying pitch at the terminal end in order to be able to stand the one-sided load generated by all superadjacent pellets.

Said object is attained by a device according to the present invention, which essentially is characterized in that, separated from said inlet opening, a number of inspection openings are arranged along essentially the entire length extension of the conveyor, that the inspection openings are situated on the topside of a casing surrounding the conveyor, and that said inspection openings are closable by means of doors.

The invention is described below by way of a preferred embodiment example, reference being made to the accompanying schematic drawings, wherein
Fig. 1 shows in perspective and in cross-section a device according to the invention as seen obliquely from above,

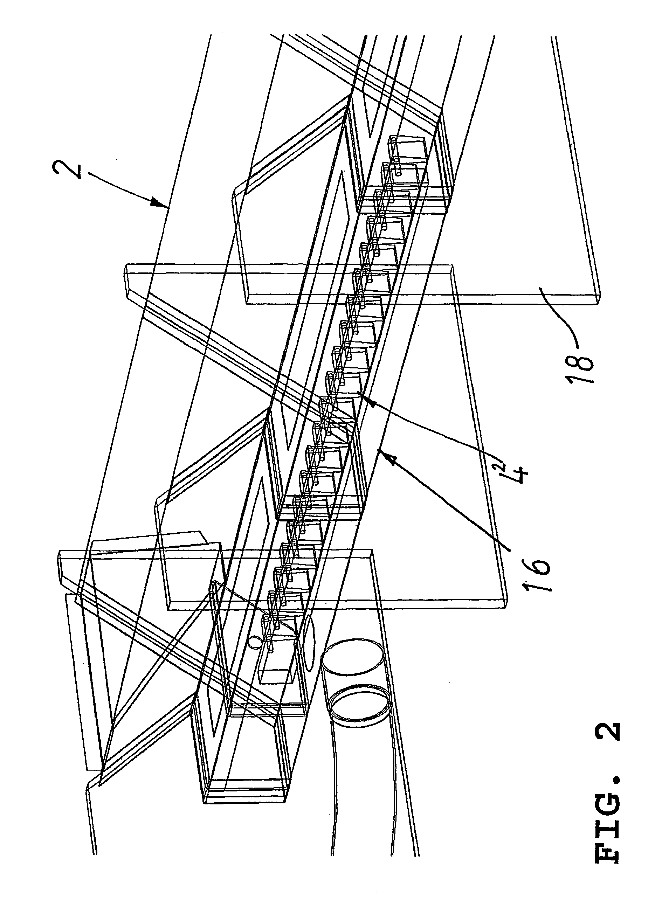

Fig. 2 shows the rear part of a device having an alternative conveyor,

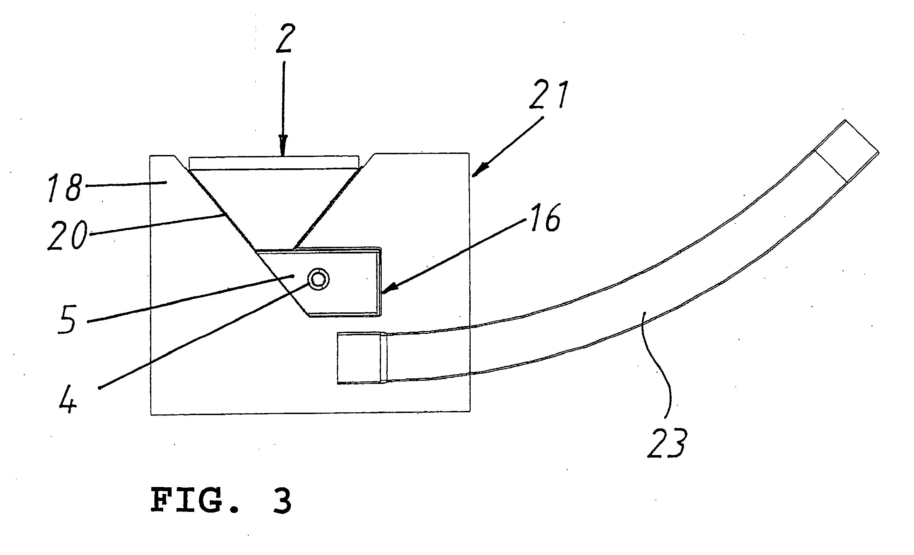

Fig. 3 shows a schematic section view of the device,
Fig. 4 shows the device in perspective,
Fig. 5 shows part of the device in perspective obliquely from above,
Fig. 6 shows the rear part of a conveyor,

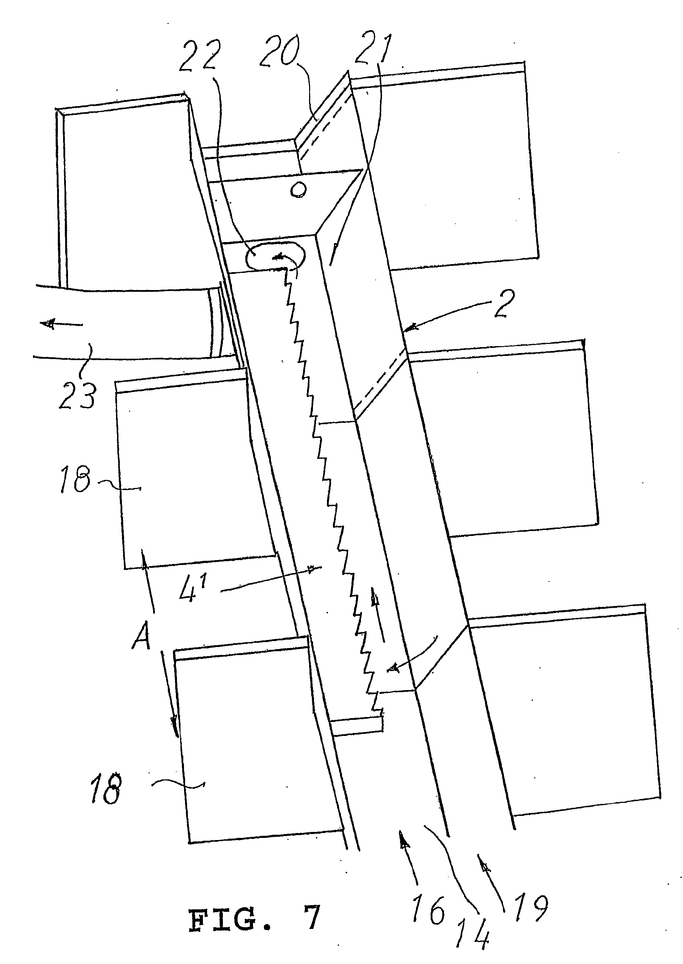

Fig. 7 shows the outlet part of a device provided with a stoker, and

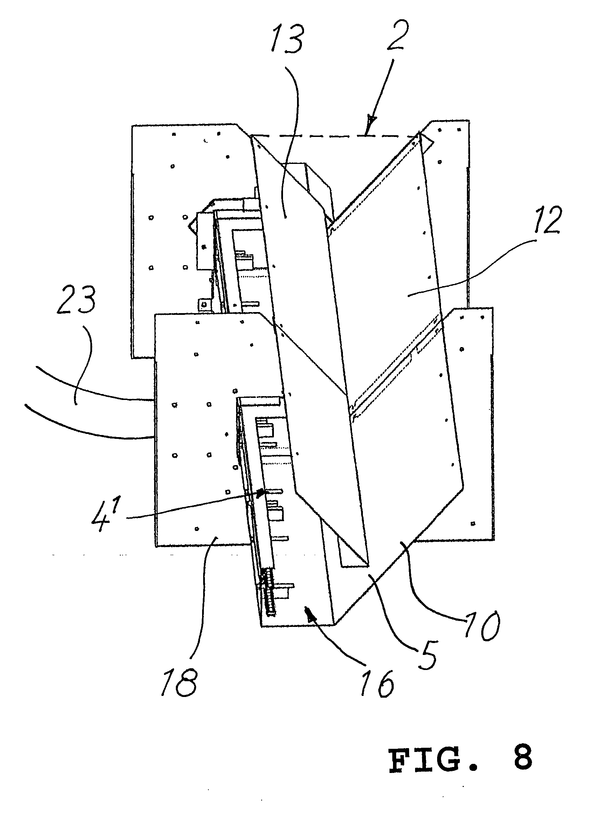

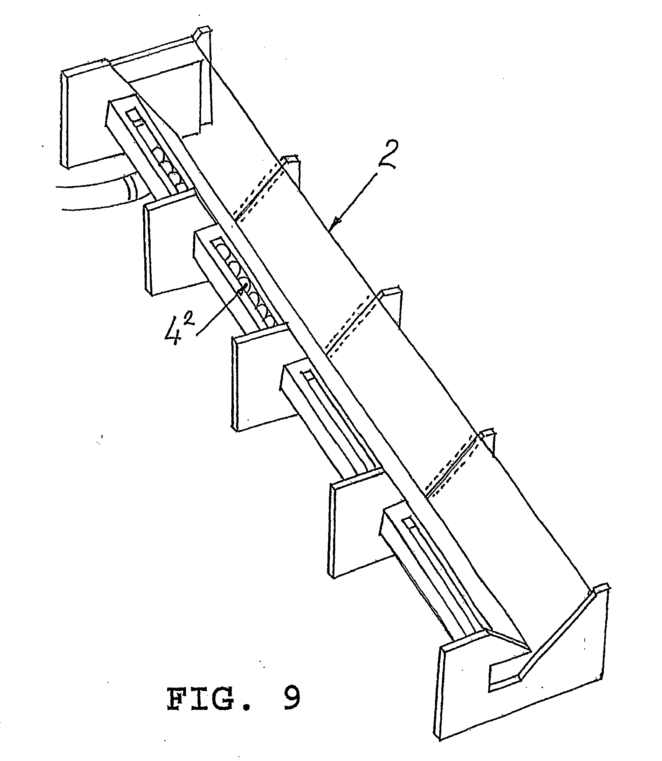

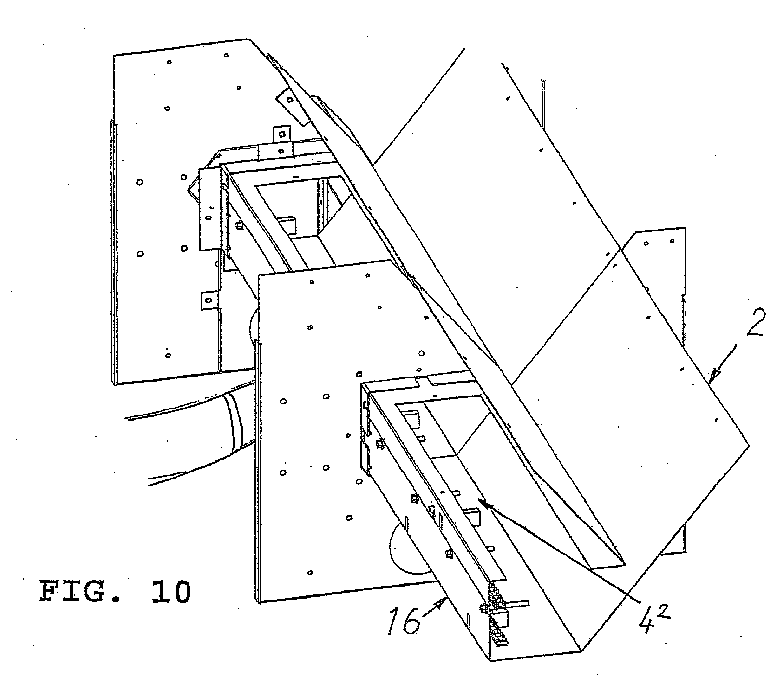

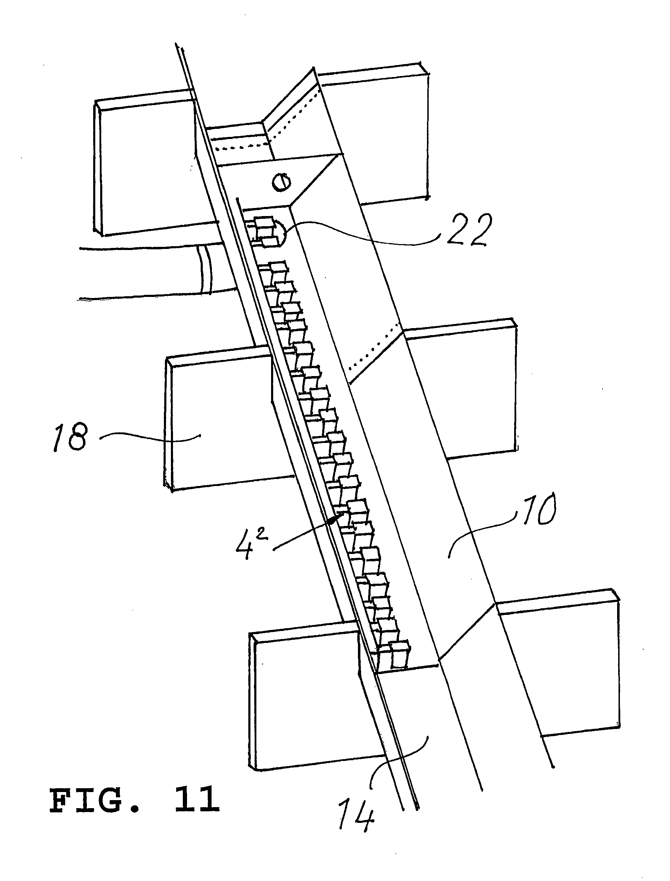

Figs. 8-11 show additional views of alternative embodiments of the device according to the invention.

According to the present invention, the same comprises possibility of easy access to the conveyor by the following features: "that separated from said inlet opening, a number of inspection openings are arranged along essentially the entire length extension of the conveyor,"
"that the inspection openings are situated on the topside of a casing surrounding the conveyor," and
"that said inspection openings are closable by means of doors."

The invention consists of a design of the bottom part of the pellet container that makes that the outlet device of the store is not loaded during the outlet, and can therefore be driven by very small engines. The outlet device is placed in the longitudinal direction of the store so that it is not loaded by material being above. Thus, the conveyor becomes entirely unloaded. The design also makes that the entire container is completely discharged. The container may be provided with different types of outlet device and is not reduced or coupled to any specially formed device, such as, e.g., a screw. Furthermore, the bottom part of the store is openable during operation (also with a filled container) and can be inspected and cleaned from possible foreign objects. The entire outlet device is fully possible to replace with the container filled up. The invention may also be used in small intermediate stores built-in into, e.g., a burner.

According to an exemplified description of the invention, the same is comprised of a device 1 at a container 2 intended for the receipt of fuel pellets 3 and other similar solid, small combustible goods arranged to be transported by a conveyor 4 from said container 2 to an intended burner or to additional containers, which however are not shown in the drawings as alternatives.

An inlet opening 5, extending along at least essentially the entire length L of the conveyor and situated laterally positioned from the conveyor 4, for combustible goods 3 is arranged to substantially completely unload said conveyor during supply 6 of combustible goods 3 toward 7 the conveyor 4 in question via the inlet opening 5 to the conveyor 4. In that connection, in order to be able to see into the inner space of the device 14 from outside, a number of inspection openings 8 separated from said inlet opening 5 are arranged evenly distributed along essentially the entire length extension L of the conveyor 4. Said inspection openings 8 are closable by openable doors 9. Said inlet opening 5 is formed of a slot-shaped bottom opening of a superadjacent container 2 as well as a leaning chute 10 extending from said bottom opening to the conveyor. The container 2 has at least pair-wise leaning side walls 12, 13 extending toward the bottom opening 11, i.e., that it obtains a conical cross-section shape, said leaning chute 10 and one leaning side wall 12 of the container being formed of a common leaning sheet-metal plate or another similar smooth part that is suitable as a container wall and material guideway.

Said inspection openings 8 are situated on the topside 15 of a formed casing 16, which surrounds said space 14 and conveyor 4 operating therein.

In shown examples, the outlet device works both with stoker and driver by the fact that an engine provided with an eccentric bring said devices slowly back and forth at a length of stroke of approx. 50 mm. The stoker is provided with fixed drivers while the depending drivers are turnable in a direction. The feeding of the screw works as usual.

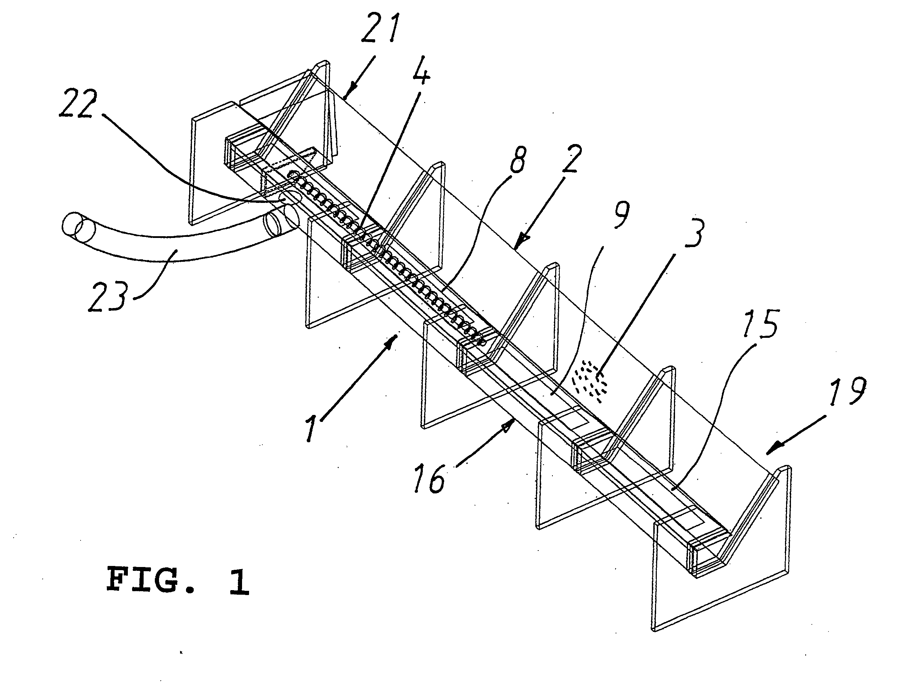

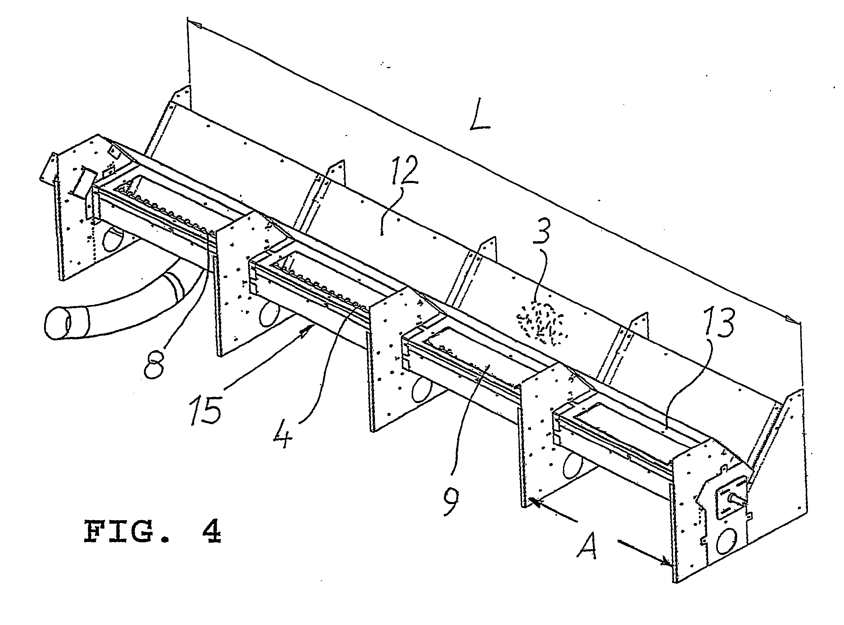

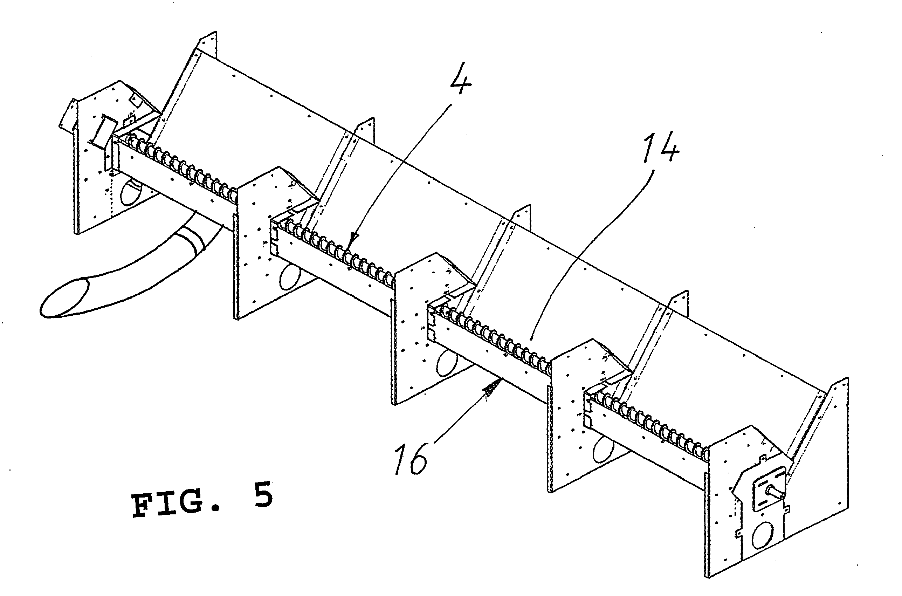

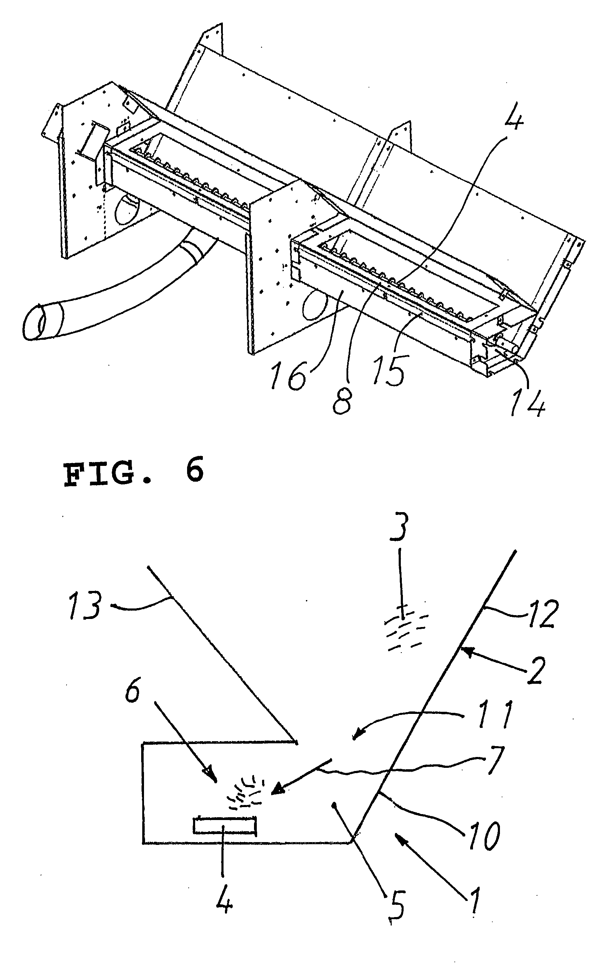

In the drawings in Figs. 1, 4-6, as example, the conveyor 4 is shown formed as a conveyor screw having a preferably even pitch, but also other kind of conveyors may be possible, such as, e.g., a stoker 4¹ or scrape 4², which are shown in the other drawings or, e.g., a conveyor belt, air nozzle, etc.

A surrounding casing 16 of the conveyor 4, 4¹, 4² and the container 2 is carried jointly by a plurality of shape-adjusted disc-shaped supports 18 situated at a mutual distance A from each other. Thus, the casing 16 and the container 2 are formed of a jointly assembled unit 19, the circumference of which is carried by supports 18 having congruent recesses 20. Thereby, easy mounting and supporting of the parts is allowed to be achieved.

The function of the invention is that pellets 3 received in the container 2 fall down to the bottom of said container 2 and out through the opening 5 situated on the side of the lower portion of the same into the casing 16 inside which the conveyor 4 is received. In doing so, minimal load on the conveyor 4 is achieved and all goods 3 in the container 2 are fed out without being left in the same. In the terminal end 21 of the space 14 in the casing 16, there may be a hole 22 to which a suction hose 23 can be connected for carrying away fed-down pellets 3 to further treatment.

Naturally, the invention is not limited to the embodiments described above and shown in the accompanying drawings. Modifications are feasible, particularly as for the nature of the different parts, without departing from the protection area of the invention, such as it is defined in the claims.

## Claims

1. Device (1) at a container (2) for fuel pellets and similar combustible goods (3) comprising a conveyor (4) surrounded by a casing (16) and transporting said combustible goods (3) from said container (2) to subsequent management, and an inlet opening (5) for said combustible goods (3) extending along essentially the entire length (L) of the conveyor (4) and situated laterally from the conveyor (4), the inlet opening (5) being arranged to substantially completely unload said container (2) during supply of combustible goods (3) via the inlet opening (5) to the conveyor (4), **characterized in that** the device (1) further comprises, separated from said inlet opening (5), a number of inspection openings (8) arranged along essentially the entire length (L) of the conveyor (4), **in that** the inspection openings (8) are situated on the topside (15) of said casing (16), **and in that** said inspection openings (8) are closable by means of doors (9).

2. Device according to claim 1, **characterized in that** the inspection openings (8) are evenly distributed along the entire length extension (L) of said conveyor (4) and casing (16).

3. Device according to any one of claims 1-2, **characterized in that** the inlet opening (5) is formed of a slot-shaped bottom opening of a superadjacent container (2) as well as a leaning chute (10) extending from said bottom opening to the conveyor (4).

4. Device according to claim 3, **characterized in that** the container (2) has leaning side walls (12, 13) extending toward the bottom opening (11).

5. Device according to any one of the preceding claims 3-4, **characterized in that** the leaning chute (10) and one side wall (12) of the container are formed of a common leaning part.

6. Device according to any one of the preceding claims, **characterized in that** the conveyor is formed of a screw (4), stoker (4¹), scrape (4²), or conveyor belt.

7. Device according to any one of the preceding claims, **characterized in that** the surrounding casing (16) of the conveyor (4, 4¹, 4²) and the container (2) is carried jointly by a plurality of shape-adjusted disc-shaped supports (18) situated at a mutual distance (A) from each other.

8. Device according to claim 7, **characterized in that** the casing (16) and the container (2) are formed of a jointly assembled unit (19), the circumference of which is carried by supports (18) formed with congruent recesses (20).

## Patentansprüche

1. Vorrichtung (1) an einem Behälter (2) für Brennstoffpellets und ähnliche brennbare Güter (3), umfassend einen Förderer (4), der von einem Mantel (16) umgeben ist und die brennbaren Güter (3) aus dem Behälter (2) zur nachfolgenden Handhabung transportiert, und eine Einlassöffnung (5) für die brennbaren Güter (3), die sich entlang im Wesentlichen der gesamten Länge (L) des Förderer (4) erstreckt und seitlich von dem Förderer (4) gelegen ist, wobei die Einlassöffnung (5) eingerichtet ist, um den Behälter (2) während der Zufuhr der brennbaren Güter (3) über die Einlassöffnung (5) zu dem Förderer (4) im Wesentlichen vollständig zu entladen,
**dadurch gekennzeichnet, dass**
die Vorrichtung (1) ferner getrennt von der Einlassöffnung (5) eine Anzahl von Prüföffnungen (8) umfasst, die entlang im Wesentlichen der gesamten Länge (L) des Förderers (4) vorgesehen sind, dass die Prüföffnungen (8) an der Oberseite (15) des Mantels (16) gelegen sind, und dass die Prüföffnungen (8) mittels Türen (9) verschließbar sind.

2. Vorrichtung nach Anspruch 1,
**dadurch gekennzeichnet, dass**
die Prüföffnungen (8) entlang der gesamten Längsausdehnung (L) des Förderers (4) und des Mantels (16) gleichmäßig verteilt sind.

3. Vorrichtung nach einem der Ansprüche 1 bis 2,
**dadurch gekennzeichnet, dass**
die Einlassöffnung (5) aus einer schlitzförmigen Bodenöffnung eines darüberliegenden Behälters (2) sowie einer geneigten Rutsche (10), die sich von der Bodenöffnung zu dem Förderer (4) erstreckt, gebildet ist.

4. Vorrichtung nach Anspruch 3,
**dadurch gekennzeichnet, dass**
der Behälter (2) geneigte Seitenwände (12, 13) aufweist, die sich in Richtung der Bodenöffnung (11) erstrecken.

5. Vorrichtung nach einem der vorhergehenden Ansprüche 3 bis 4,
**dadurch gekennzeichnet, dass**
die geneigte Rutsche (10) und eine Seitenwand (12) des Behälters aus einem gemeinsamen geneigten Teil gebildet sind.

6. Vorrichtung nach einem der vorhergehenden Ansprüche,
**dadurch gekennzeichnet, dass**
der Förderer aus einer Schnecke (4), einem Schieber (4¹), einem Kratzer (4²) oder einem Förderband gebildet ist.

7. Vorrichtung nach einem der vorhergehenden Ansprüche,
**dadurch gekennzeichnet, dass**
der umgebende Mantel (16) des Förderers (4, 4¹, 4²) und des Behälters (2) durch eine Mehrzahl von in der Form angepassten, scheibenförmigen Stützen (18), die in einem wechselseitigen Abstand (A) voneinander gelegen sind, gemeinsam getragen ist.

8. Vorrichtung nach Anspruch 7,
**dadurch gekennzeichnet, dass**
der Mantel (16) und der Behälter (2) aus einer zusammengebauten Einheit (19) gebildet sind, deren Umfang durch Stützen (18) getragen ist, die mit deckungsgleichen Ausnehmungen (20) gebildet sind.

## Revendications

1. Dispositif (1) dans un contenant (2) pour des granules de combustible et des éléments combustibles similaires (3), comprenant un transporteur (4) entouré par un carter (16), et transportant les éléments combustibles (3) à partir du contenant (2) pour une gestion ultérieure, et une ouverture d'entrée (5) destinée aux éléments combustibles (3) s'étendant essentiellement le long de toute la longueur (L) du transporteur (4), et située latéralement par rapport au transporteur (4), l'ouverture d'entrée (5) étant prévue pour décharger de façon sensiblement complète le contenant (2) au cours de l'alimentation du transporteur (4) en éléments combustibles (3) par l'intermédiaire de l'ouverture d'entrée (5), **caractérisé en ce que** le dispositif (1) comprend en outre, séparées de l'ouverture d'entrée (5), un nombre d'ouvertures d'inspection (8) prévues essentiellement le long de toute la longueur (L) du transporteur (4), **en ce que** les ouvertures d'inspection (8) sont situées sur le dessus (15) du carter (16), et **en ce que** les ouvertures d'inspection (8) peuvent être fermées par des portes (9).

2. Dispositif selon la revendication 1, **caractérisé en ce que** les ouvertures d'inspection (8) sont réparties de manière régulière le long de toute l'étendue de la longueur (L) du transporteur (4) et du carter (16).

3. Dispositif selon l'une quelconque des revendications 1 et 2, **caractérisé en ce que** l'ouverture d'entrée (5) est formée d'une ouverture de fond en forme de fente d'un contenant adjacent supérieur (2), ainsi que d'une goulotte inclinée (10) s'étendant à partir de l'ouverture de fond jusqu'au transporteur (4).

4. Dispositif selon la revendication 3, **caractérisé en ce que** le contenant (2) présente des parois latérales inclinées (12, 13) s'étendant en direction de l'ouverture de fond (11).

5. Dispositif selon l'une quelconque des revendications 3 et 4, **caractérisé en ce que** la goulotte inclinée (10) et une paroi latérale (12) du contenant sont formées d'une partie inclinée commune.

6. Dispositif selon l'une quelconque des revendications précédentes, **caractérisé en ce que** le transporteur est formé d'une vis (4), d'un chargeur (4¹), d'un racleur (4²), ou d'une courroie de transporteur.

7. Dispositif selon l'une quelconque des revendications précédentes, **caractérisé en ce que** le carter entourant (16) le transporteur (4, 4¹, 4²) et le contenant (2) est supporté conjointement par plusieurs supports en forme de disque (18) ayant une forme ajustée, situés à une distance mutuelle (A) les uns des autres.

8. Dispositif selon la revendication 7, **caractérisé en ce que** le carter (16) et le contenant (2) sont formés d'une unité assemblée conjointement (19), dont la circonférence est réalisée par des supports (18) munis d'évidements congruents (20).
